# EUROPEAN PATENT SPECIFICATION

(11) **EP 2 178 629 B1**
(45) Date of publication and mention of the grant of the patent: **20.04.2011**
(21) Application number: 08758355.5
(22) Date of filing: 29.04.2008
(51) Int. Cl.: B01J 8/18, B01J 8/24

(54) **FLUIDIZED-BED REACTOR FOR THE TREATMENT OF FLUIDIZABLE SUBSTANCES AND PROCESS HEREFOR**
WIRBELSCHICHTREAKTOR ZUR BEHANDLUNG VON VERWIRBELBAREN SUBSTANZEN UND VERFAHREN DAFÜR
REACTEUR A LIT FLUIDISE POUR LE TRAITEMENT DE SUBSTANCES FLUIDISABLES ET PROCEDE CORRESPONDANT

(30) Priority: 09.07.2007 DE 102007032085
(43) Date of publication of application: 28.04.2010
(73) Proprietor: Outotec OYJ, 02200 Espoo (FI)
(72) Inventor: EMMEL, Jürgen, 64584 Biebesheim (DE); HEIN, Jean-Claude, 61194 Niddatal (DE); LAUMANN, Max-Dieter, 61440 Oberursel (DE); REISSER, Franz, 63477 Maintal (DE)
(74) Representative: KEIL & SCHAAFHAUSEN Patentanwälte
(86) International application number: PCT/EP2008/003462
(87) International publication number: WO 2009/006958

(56) References cited:
- WO-A-2004/057040
- WO-A-2006/048283
- US-A- 4 159 305
- VIJAY P L ET AL: "PREOXIDATION AND HYDROGEN REDUCTION OF ILMENITE IN A FLUIDIZED BED REACTOR" METALLURGICAL AND MATERIALS TRANSACTIONS A: PHYSICAL METALLURGY &MATERIALS SCIENCE, ASM INTERNATIONAL, MATERIALS PARK, OH, US, vol. 27B, no. 5, 1 October 1996 (1996-10-01), pages 731-738, XP000632260 ISSN: 1073-5623

## Description

This invention relates to a fluidized-bed reactor for the chemical and/or physical treatment of fluidizable substances in a reactor interior, comprising at least one central tube for introducing process gas into the reactor interior and a tuyère bottom for introducing fluidizing gas into the reactor interior, wherein in the mounting position below the central tube a container is provided, into which opens a first conduit for supplying the process gas, and wherein in the mounting position below the tuyère bottom an annular space surrounding the central tube is provided, into which opens a conduit for supplying the fluidizing gas. Furthermore, this invention relates to a process for the chemical and/or physical treatment of fluidizable substances in such reactor.

US 4 159 305 A discloses a fluidized bed reactor for operation at elevated temperatures, which is supplied with fluidizing gas out of a hot windbox. The reaction chamber including the fluidized bed is in the upper portion of the fluidized bed reactor and is separated from the windbox in the lower portion by a constriction element. A number of tuyères provide a connection between the hot windbox and the reaction chamber. Side fuel guns and bottom fuel guns are provided for injecting fuel into the reaction chamber. To realize large diameters of the reactor (> 6 m) and gas stream temperatures of more than 260 °C, an improved structure for the refractory constriction element is necessary.

WO 2004/057040 A is directed to the heat treatment of solids containing titanium in a fluidized bed. A first gas stream is injected via a gas supply tube from below into a mixing chamber of the reactor. Around the gas supply tube, a stationary annular fluidized bed is provided which is fluidized by a fluidizing gas introduced from a gas distributor chamber through a gas distributor. This structure combines the advantages of a stationary fluidized bed with those of a circulating fluidized bed and provides for an optimum heat and mass transfer, while the first gas stream entrains solids from the annular stationary fluidized bed which leads to an intensively mixed suspension in the mixing chamber.

Document WO 2006/048283 A describes a process and plant for producing titania slag from ilmenite. After a two-stage pre-heating, the ilmenite is introduced in reactor, where a fluidized-bed is formed by introducing gas. To carbonize the ilmenite, coal is supplied into the reactor. Via a connecting passage, a gas-solid-mixture from the carbonization reactor is passed into a reduction reactor. Therein, a circulating fluidized bed is formed. Afterwards, the ilmenite is melted in a furnace to form liquid pig iron and titania slag.

From the prior art, fluidized-bed reactors as mentioned above are known, in which the annular space surrounding the central tube is attached to the central tube at a distance from the container. The walls of the central tube mostly are made of a high-temperature resistant stainless steel, in order to be able to withstand the high temperatures of frequently up to about 1000°C, which occur during the treatment of fluidizable substances. In addition, a cooling of the central tube frequently is provided, and for this purpose a narrow clearance mostly is created around the central tube, which partly is located inside the annular space for supplying the fluidizing gas, and through which for instance air of ambient temperature is passed.

Despite the cooling and the use of comparatively expensive high-temperature resistant stainless steel, not only the high temperatures inside the central tube can in part be controlled only with great difficulty, but in such reactors the entire construction is also regarded as worthy of improvement, in particular in terms of its rigidity and fatigue strength, especially in the case of a change in temperature (start-up and shutdown of the plant). Beside the thermal loads acting on the central tube, there are also mechanical loads as a result of the annular space for supplying the fluidizing gas, which supports on said central tube.

When using such reactors, the energetic efficiency also is regarded as worthy of improvement, as the cooling of the central tube, through which heated process gas is supplied, leads to a cooling of the process gas and hence to a deterioration of the efficiency.

Accordingly, it is the object of the present invention to create a reactor and a process as mentioned above, in which an improved energetic efficiency of the process can be achieved without impairment of the operational safety of the construction.

In accordance with the invention, there is provided a reactor comprising the features of claim 1. In the reactor the metallic walls of the central tube, of the container and of the annular space are provided with a thermal insulating coating, wherein at least portions of the outer wall of the annular space form a continuous unit with the wall of the container. The lining of the metallic walls of the central tube, of the container and of the annular space provides for considerably reducing the thermal loads acting on these walls, in particular in the case of processes with higher temperatures of the process gas and/or fluidizing gas. At the same time, a substantially uniform temperature distribution is obtained in the walls of the container and of the annular space, so that no thermal stresses are generated in the transition region between these components. Due to the fact that the outer wall of the annular space forms a unit with the wall of the container, the mechanical loads acting on the central tube also are reduced considerably. Due to the inventive configuration of the fluidized-bed reactor, a constructively simpler and considerably stiffer construction thus is achieved, which better than known reactors can also withstand higher thermal and/or mechanical loads. In accordance with the present invention the term unit defines that the outer wall of the annular space adjoins the wall of the container and that said two walls are preferably fixed or attached to each other, e.g. by bonding or the like. However, this does not exclude that the two walls may be separated form each other, e.g. for replacement due to wear or the like.

In accordance with a preferred embodiment of the invention, the thermal insulating coating is formed by a lining with refractory concrete. The insulating coating can also include at least one layer of refractory brick and/or refractory concrete and/or a layer of light-weight refractory brick and/or insulating concrete. As a rule, a multilayer structure is used.

By means of the inventive construction of the fluidized-bed reactor, which effects a reduction of the thermal and mechanical loads as a result of thermal expansion, it is possible to manufacture the metallic walls of the central tube, of the container and/or of the annular space of a heat-resistant carbon steel. The same is much less expensive than the commonly used high-temperature resistant stainless steel, so that the manufacturing costs of the fluidized-bed reactor of the invention can be kept low.

When at least portions of the outer wall of the annular space support on the wall of the container, a particularly effective mechanical relief of the central tube can be achieved. The rigidity of the fluidized-bed reactor is further improved thereby. This also provides for a lateral introduction of the hot process gas with a high pressure of e.g. about 60 kPa into the container, without having to fear a damage of the reactor by stress peaks.

In accordance with a preferred embodiment of the invention, at least one compensator element is arranged in the central tube in the mounting position just below the tuyère bottom for compensating temperature-related changes in length of the central tube. It is recommendable, for instance, to provide the compensator element in the mounting position between the tuyère bottom and the second conduit for supplying the fluidizing gas. Hence, the compensator element is disposed inside the central tube so as to be easily accessible. A manhole in direct vicinity of the compensator element also can contribute thereto. By compensating temperature-related changes in length, the compensator element itself reduces the stresses caused thereby inside the central tube. This also contributes to a reduction of the loads acting on the reactor in accordance with the invention.

In operation, it cannot be excluded that dust and/or fluidizable substances get into the container and/or into the annular space through the central tube or through the tuyère bottom. This can lead to a considerable impairment of the gas flow. In accordance with the invention, at least one opening for discharging dust and/or fluidizable substances therefore is provided in the container and/or in the annular space, in particular in the lower region each in the mounting position. In this way, clogging of the central tube or of the tuyère bottom or of the container or annular space provided thereunder can effectively be avoided, without this involving an increased cleaning effort.

In a fluidized-bed reactor as mentioned above, process gas with a temperature of more than 400°C, preferably more than 600°C, particularly preferably more than 800°C is introduced into the reactor interior via a central tube, and fluidizing gas with a temperature of preferably more than 100°C is introduced into the reactor interior via a tuyère bottom. The fluidizing gas is supplied via an annular space arranged below the tuyère bottom in the mounting position and surrounding the central tube, into which opens a conduit for supplying the fluidizing gas, without the walls of the central tube being cooled in addition. In other words, the process is designed such that the fluidizing gas can already be introduced into the reactor interior with a comparatively high temperature. Together with the likewise comparatively high temperature of the process gas introduced into the reactor interior, the energetic efficiency of the process can distinctly be improved thereby. Preferably, preheated return gas is used here as fluidizing gas. The energetic efficiency of the process also is further improved by omitting an additional cooling of the central tube, as the central tube and hence also the preheated process gas passed through the same is not cooled by the additional cooling.

Preferably, the process gas is introduced into the reactor interior with a temperature of more than 1000°C, in particular with a temperature of more than 1150°C. Furthermore, the pressure of the process gas can be above 30 kPa, preferably above 45 kPa, in particular about 60 kPa. Furthermore, the temperature of the fluidizing gas introduced into the reactor interior preferably is above 200°C, in particular above 300°C.

The temperature in the reactor can be even higher than the temperature of the introduced gases, e. g. by internal combustion. This can be achieved by introduction of fuel, e. g. with a lance, into the reactor or mixing of the introduced gases with gaseous fuels before entering the reactor. Furthermore after burning of the introduced gases and/or burning the dust contained in the gases in the fluidized-bed reactor is possible.

The fluidized-bed reactor of the invention can be used in particular for the calcination of ilmenite, e. g. reducing, or similar fluidizable substances, but also for calcining aluminum hydroxide, for preheating other substances, e.g. iron-containing ores, or for the combustion of substances in the fluidized-bed reactor.

Another example of the process of the invention consists in that in a calcining reactor hot waste gases, which also are contaminated with solids, are introduced into the reactor via the central tube. Inside the reactor, a lower temperature is obtained, which depends on the reaction taking place in the reactor and on the solids mass flow into the reactor. Preferably, this type of reactor is utilized for processes in which a combustion of the fuel inside the reactor cannot be performed due to the low reactor temperature or can only be realized by expensive, low-burning fuels, such as butane. For the calcination of clay, for instance, a reactor temperature of 650°C is desirable, which is achieved by supplying a hot waste gas of up to 1200°C. Depending on the requirements of the end product, the hot gas can be generated by the combustion of fuels burning without residue, such as natural gas or the like, or by the combustion of ash-containing fuels, such as coal, biomass or the like, in a combustion chamber before the reactor, possibly in conjunction with gas cleaning.

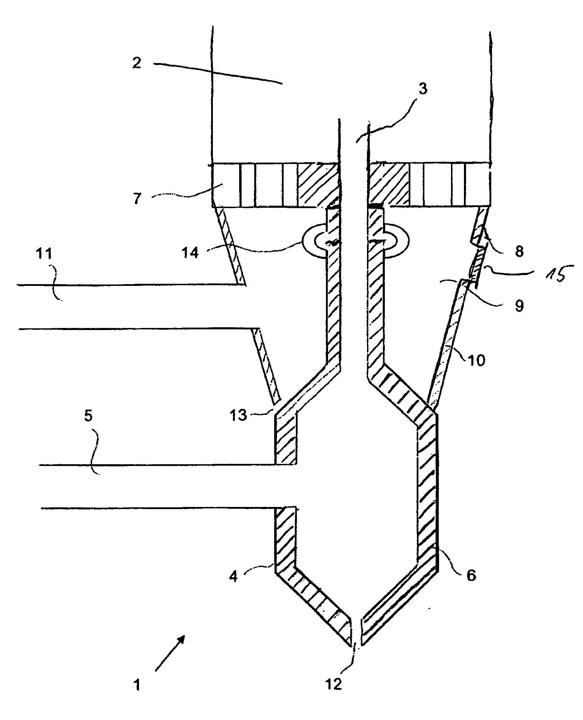

The invention will subsequently be explained in detail by means of an embodiment and with reference to the drawing. All features described and/or illustrated form the subject-matter of the invention per se or in any combination, independent of their inclusion in the claims or their back-reference.

The only Figure schematically shows a sectional view of a section of a fluidized-bed reactor in accordance with the invention in a particularly preferred embodiment. The lower region of the schematically indicated fluidized-bed reactor 1 in the mounting position as shown in the Figure shows a reactor interior 2, in which fluidizable substances, such as ilmenite, are subjected to a chemical and/or physical, for instance thermal treatment, in particular to a reducing calcination.

A central tube 3, which in the Figure protrudes upwards into the reactor interior 2, opens into the reactor interior 2. In the mounting position, and downwards in the drawing, a container 4 with an enlarged diameter as compared to the central tube 3 adjoins the central tube 3. A first conduit 5, through which hot process gas is introduced with a temperature of for instance about 1250°C, opens into this container 4, which process gas then flows through the container 4 and the central tube 3 into the reactor interior 2.

Both the central tube 3 and the container 4 substantially are made of a heat-resistant carbon steel, which on the inside is lined with a layer 6 of a refractory concrete. This inner insulation of the central tube 3 and of the container 4 effects that an additional cooling of the central tube 3, for instance by means of ambient air, can completely be omitted. In the particularly preferred embodiment of the Figure, the upper part of the central tube 3 is made of a high-temperature resistant stainless steel, preferably without such lining.

In another embodiment, this upper part can completely be omitted, so that the central tube ends directly at the level of the tuyère bottom. In this special embodiment it is preferred that the tuyère bottom is arranged at an angle and/or the nozzles are omitted, so that the bottom only is a plate possibly lined with refractory bricks.

Parts of the bottom of the reactor interior 2 surrounding the central tube 3 preferably constitute a tuyère bottom 7 with a plurality of nozzles opening into the reactor interior 2. Different to the Figure, the bottom can be configured at an angle and need not be equipped with nozzles. In the mounting position below the tuyère bottom 7, an annular space 9 is formed by a wall 8, which surrounds the central tube 3. The wall 8 of the annular space 9 supports on the upper wall of the container 4 as seen in the Figure. Hence the central tube 3 substantially is liberated from mechanical loads by the annular space 9, and the construction of the reactor 1 becomes stiffer on the whole. At the same time, an approximately constant distribution of heat is achieved substantially along the entire length of the central tube 3 by including the central tube 3 in the annular space 9, so that there are no local load peaks as a result of different thermal expansions.

The wall 8 can also be made of a heat-resistant carbon steel and be lined with an insulating layer 10 e.g. of a refractory concrete on the inner side facing the central tube 3.

The insulating layers 6 and 10 effect that despite the different temperatures of the gases supplied through the annular space 9 and the central tube 3 an at least approximately equal temperature is obtained inside the metallic walls of the central tube 3, of the container 4 and of the wall 8, whereby thermal stresses can be reduced considerably.

A second conduit 11, through which fluidizing gas is introduced into the annular space 9 and via the same through the tuyère bottom 7 into the reactor interior 2, preferably opens into the annular space 9. The fluidizable substances present in the reactor interior 2 are fluidized thereby. As fluidizing gas, there is preferably used gas preheated to for instance about 350°C, possibly return gas.

In principle, it is also possible to not completely supply the annular space 9 with fluidizing gas, but to only separate a part thereof and supply the same with gas. In a further embodiment it is possible to also partly keep the annular space open and/or introduce or pass through no gas at all.

As shown in the Figure, both at the lower end of the container 4 in the mounting position and at the lower end of the annular space 9 in the mounting position, openings 12 and 13, respectively, are formed in the wall 8. The size of the openings 12 and 13 is dimensioned such that dust entrained by the process or fluidizing gas and/or fluidizable substances falling through the tuyère bottom 7 or the central tube 3 into the annular space 9 or into the container 4 can be discharged from the annular space 9 or from the container 4, in order to thus prevent clogging or plugging of the supply passages for the process or fluidizing gas.

The size of the container 4 is preferably designed such that this container can completely receive the material falling back into the central tube in the case of an unexpected shutdown of the reactor, without the supply conduit 5 being clogged. Likewise, the annular space 9 preferably is configured such that the material falling back cannot clog the supply conduit 11 in the case of a sudden shutdown.

In the upper region of the central tube 3, a compensator element 14 is provided, which in the illustrated embodiment is arranged just below the tuyère bottom and is easily accessible e.g. via a manhole 15 through the annular space 9. The compensator element 14 is suitable for absorbing e.g. temperature-related changes in length of the central tube 3. Thus, it can further decrease the loads acting on the central tube 3.

### List of Reference Numerals:

- 1: fluidized-bed reactor
- 2: reactor interior
- 3: central tube
- 4: container
- 5: first conduit (process gas)
- 6: insulating coating
- 7: tuyère bottom
- 8: wall
- 9: annular space
- 10: insulating coating
- 11: second conduit (fluidizing gas)
- 12: opening in the container 4
- 13: opening in the wall 8
- 14: compensator element
- 15: manhole

## Claims

1. A fluidized-bed reactor for the chemical and/or physical treatment of fluidizable substances in a reactor interior (2), comprising at least one central tube (3) for introducing process gas into the reactor interior (2) and a bottom,
wherein in the mounting position below the central tube (3) a container (4) is provided, into which opens a conduit (5) for supplying the process gas, wherein an annular space (9) surrounding the central tube (3) is provided
wherein the metallic walls of the central tube (3), of the container (4) and of the annular space (9) are provided with a thermal insulating coating (6, 10),
wherein at least portions of the outer wall (8) of the annular space (9) form a unit with the wall of the container (4), and
wherein the container (4) provided below the central tube (3) is enlarged in diameter with respect to the central tube (3).

2. The fluidized-bed reactor according to claim 1, **characterized in that** the bottom is a tuyère bottom (7) for introducing fluidizing gas into the reactor interior (2).

3. The fluidized-bed reactor according to claim 2, **characterized in that** in the mounting position below the tuyère bottom (7) the annular space (9) surrounding the central tube (3) is provided, into which opens a second conduit (11) for supplying the fluidizing gas.

4. The fluidized-bed reactor according to any of the preceding claims, **characterized in that** the insulating coating (6, 10) is formed by at least one layer or lining made of a refractory concrete.

5. The fluidized-bed reactor according to to any of the preceding claims, **characterized in that** the metallic walls of the central tube (3), of the container (4) and/or of the annular space (9) are made of a heat-resistant carbon steel.

6. The fluidized-bed reactor according to any of the preceding claims, **characterized in that** at least portions of the outer wall (8) of the annular space (9) support on the wall of the container (4).

7. The fluidized-bed reactor according to any of the preceding claims, **characterized in that** in the central tube (3) in the mounting position just below the tuyère bottom (7), preferably in the mounting position above the second conduit (11) for supplying the fluidizing gas, at least one compensator element (14) is arranged for compensating temperature-related changes in length of the central tube (3).

8. The fluidized-bed reactor according to any of the preceding claims, **characterized in that** in the container (4) and/or in the annular space (9), in particular in the lower region each in the mounting position, at least one opening (12, 13) is provided for discharging dust and/or fluidizable substances.

9. Use of a fluidized-bed reactor (1) according to any of claims 1 to 7 for the reducing calcination of ilmenite.

## Patentansprüche

1. Wirbelschichtreaktor zum chemischen und/oder physikalischen Behandeln von wirbelfähigen Substanzen in einem Reaktorinnenraum (2) mit wenigstens einem Zentralrohr (3) zum Einbringen von Prozessgas in den Reaktorinnenraum (2) und einem Boden,
wobei in Einbaulage unterhalb des Zentralrohres (3) ein Behälter (4) vorgesehen ist, in welchen eine Leitung (5) zur Zufuhr des Prozessgases mündet, wobei ein das Zentralrohr (3) umgebender Ringraum (9) vorgesehen ist,
wobei die metallischen Wände des Zentralrohres (3), des Behälters (4) und des Ringraumes (9) mit einer thermischen Isolierbeschichtung (6, 10) versehen sind,
wobei wenigstens Abschnitte der Außenwand (8) des Ringraumes (9) eine Einheit mit der Wand des Behälters (4) bilden, und
wobei der Durchmesser des unterhalb des Zentralrohres (3) vorgesehene Behälters (4) gegenüber dem Durchmesser des Zentralrohrs (3) verbreitert ist.

2. Wirbelschichtreaktor nach Anspruch 1, **dadurch gekennzeichnet, dass** der Boden ein Düsenboden (7) für die Zufuhr eines Fluidisierungsgases in das Reaktorinnere (2) ist.

3. Wirbelschichtreaktor nach Anspruch 2, **dadurch gekennzeichnet, dass** an der Befestigungsposition unterhalb des Düsenbodens (7) der das Zentralrohr (3) umgebende Ringraum (9) vorgesehen ist, in welchen sich eine zweite Leitung (11) für die Zufuhr des Fluidisierungsgases öffnet.

4. Wirbelschichtreaktor nach einem der vorhergehenden Ansprüche, **dadurch gekennzeichnet, dass** die Isolierbeschichtung (6, 10) durch wenigstens eine Schicht oder Auskleidung aus einem feuerfesten Beton gebildet ist.

5. Wirbelschichtreaktor nach einem der vorhergehenden Ansprüche, **dadurch gekennzeichnet, dass** die metallischen Wände des Zentralrohres (3), des Behälters (4) und/oder des Ringraumes (9) aus einem warmfesten Kohlenstoffstahl bestehen.

6. Wirbelschichtreaktor nach einem der vorhergehenden Ansprüche, **dadurch gekennzeichnet, dass** sich die Außenwand (8) des Ringraumes (9) wenigstens abschnittsweise auf der Wand des Behälters (4) abstützt.

7. Wirbelschichtreaktor nach einem der vorhergehenden Ansprüche, **dadurch gekennzeichnet, dass** in dem Zentralrohr (3) in Einbaulage kurz unterhalb des Düsenbodens (7), vorzugsweise in Einbaulage oberhalb der zweiten Leitung (11) zur Zufuhr des Fluidisierungsgases, wenigstens ein Kompensatorelement (14) zum Ausgleich temperaturbedingter Längenänderungen des Zentralrohres (3) angeordnet ist.

8. Wirbelschichtreaktor nach einem der vorhergehenden Ansprüche, **dadurch gekennzeichnet, dass** in dem Behälter (4) und/oder in dem Ringraum (9), insbesondere in dem jeweils in Einbaulage unteren Bereich, wenigstens eine Öffnung (12, 13) zum Ausbringen von Staub und/oder wirbelfähigen Substanzen vorgesehen ist.

9. Verwendung eines Wirbelschichtreaktors (1) nach einem der Ansprüche 1 bis 7 zum reduzierenden Rösten von Ilmenit.

## Revendications

1. Réacteur en lit fluidisé pour le traitement chimique et/ou physique de substances fluidisables dans un intérieur (2) de réacteur, qui comprend au moins un tube central (3) destiné à introduire un gaz de traitement dans l'intérieur (2) de réacteur et un fond, dans lequel dans la position de montage en dessous du tube central (3) un récipient (4) est fourni, dans lequel un conduit (5) s'ouvre pour l'alimentation en gaz de traitement, dans lequel un espace annulaire (9) entourant le tube central (3) est fourni dans lequel les parois métalliques du tube central (3) du récipient (4) et de l'espace annulaire (9) sont pourvues d'un revêtement thermo-isolant (6, 10),
dans lequel au moins deux parties de la paroi extérieure (8) de l'espace annulaire (9) forment une unité avec la paroi du récipient (4), et
dans lequel le diamètre du récipient (4) fourni sous le tube central (3) est plus grand que le diamètre du tube central (3).

2. Réacteur en lit fluidisé selon la revendication 1, **caractérisé en ce que** le fond est un fond à tuyères (7) pour l'introduction de gaz fluidisant dans l'intérieur (2) du réacteur.

3. Réacteur en lit fluidisé selon la revendication 2, **caractérisé en ce que** dans la position de montage en dessous du fond à tuyères (7) l'espace annulaire (9) entourant le tube central (3) est prévu, dans lequel s'ouvre un second conduit (11) pour l'alimentation en gaz fluidisant.

4. Réacteur en lit fluidisé selon l'une quelconque des revendications précédentes, **caractérisé en ce que** le revêtement isolant (6, 10) est formé par au moins une
couche ou un revêtement constitué par un ciment réfractaire.

5. Réacteur en lit fluidisé selon l'une quelconque des revendications précédentes, **caractérisé en ce que** les parois métalliques du tube central (3), du récipient (4) et/ou de l'espace annulaire (9) sont constituées par un acier au carbone thermorésistant.

6. Réacteur en lit fluidisé selon l'une quelconque des revendications précédentes, **caractérisé en ce qu'**au moins des parties de la paroi extérieure (8) de l'espace annulaire (9) supportent la paroi du récipient (4).

7. Réacteur en lit fluidisé selon l'une quelconque des revendications précédentes, **caractérisé en ce que** dans le tube central (3) dans la position de montage juste en dessous du fond à tuyères (7), de préférence dans la position de montage au-dessus du second conduit (11) pour l'alimentation en gaz fluidisant, au moins un élément compensateur (14) est disposé pour compenser les modifications liées à la température dans la longueur du tube central (3).

8. Réacteur en lit fluidisé selon l'une quelconque des revendications précédentes, **caractérisé en ce que** dans le récipient (4) et/ou dans l'espace annulaire (9), en particulier dans la région inférieure chacun dans la position de montage, au moins une ouverture (12, 13) est prévue pour décharger la poussière et/ou les substances fluidisables.

9. Utilisation d'un réacteur en lit fluidisé (1) selon l'une quelconque des revendications 1 à 7, pour la réduction de la calcination d'ilménite.
